# EUROPEAN PATENT APPLICATION

(11) **EP 2 541 406 A1**
(43) Date of publication of application: **02.01.2013**
(21) Application number: 10846479.3
(22) Date of filing: 23.02.2010
(51) Int. Cl.: G06F 9/50, G06F 9/46, G06F 9/52

(54) **MULTI-CORE PROCESSOR SYSTEM, INTERRUPT PROGRAM, AND INTERRUPT METHOD**

(71) Applicant: Fujitsu Limited, Kawasaki-shi, Kanagawa 211-8588 (JP)
(72) Inventor: YAMASHITA, Koichiro, Kawasaki-shi Kanagawa 211-8588 (JP); YAMAUCHI, Hiromasa, Kawasaki-shi Kanagawa 211-8588 (JP); MIYAZAKI, Kiyoshi, Kawasaki-shi Kanagawa 211-8588 (JP)
(74) Representative: Ward, James Norman
(86) International application number: PCT/JP2010/052733
(87) International publication number: WO 2011/104812

(57) **Abstract**

In an application (A), upon detecting an exclusion start, an interrupt signal (exclusion start) is transmitted to a thread (B). Upon receiving notification of the exclusion start event, the thread (B) is saved, whereby a slave CPU (102) is released. Since thread (Y) is present in a thread queue, the thread (Y) is assigned to the slave CPU (102). Consequently, the thread (Y) is executed by the slave CPU (102). Upon completion of the thread (Y), the thread queue becomes empty and thus, a low power mode is transitioned to. Thereafter, in the application (A), upon detection of an exclusion end event, an interrupt signal (exclusion end) is transmitted from the application (A) to the slave CPU (102). Upon receiving notification of the exclusion end event at the slave CPU (102), a thread (B) is restored by the slave CPU (102). Consequently, the thread (B) can be re-executed from the saved position thereof.

## Description

### TECHNICAL FIELD

The embodiment discussed herein is related to a multi-core processor system, an interrupt program, and an interrupt method that control thread interrupts.

### BACKGROUND ART

Conventionally, multi-core processor systems have been disclosed. For example, in response to a start request from a master CPU, a multi-core processor starts a slave library as a thread at a slave central processing unit (CPU), without invoking the kernel of the operating system (OS) (see, for example, Patent Documents 1 to 4). In this case, overhead consequent to the OS kernel is minimized by having only minimally required thread execution preparation and a function of interrupt control from the master CPU, at the slave CPU, without invoking the kernel.

For example, when a library thread executed by the master CPU has a slave library thread call for the slave CPU, parallel execution can be realized by the master CPU and the slave CPU.

[Patent Document 1] Japanese Laid-Open Patent Publication No. 2005-25726
[Patent Document 2] Japanese Laid-Open Patent Publication No. H6-243102
[Patent Document 3] Japanese Laid-Open Patent Publication No. H6-149752
[Patent Document 4] Japanese Laid-Open Patent Publication No. 2006-185348

### DISCLOSURE OF INVENTION

### PROBLEM TO BE SOLVED BY THE INVENTION

Nonetheless, with the conventional technologies above, although the slave CPU executes a thread when the slave CPU is called by the master CPU, when the slave CPU is not called, the slave CPU continues to remain in a quiescent mode. Cases in which the master CPU and the slave CPU continuously operate in parallel are rare and generally, the slave CPU is in a quiescent mode until called upon by the master CPU.

Thus, although the utilization efficiency of the system is determined by the ratio of software to be run that can be executed in parallel (Amdahl's law), problems arise in that accompanying increases in the number of processors, or accompanying decreases in the ratio of software that can be executed in parallel, utilization efficiency becomes extremely poor and performance deteriorates.

On the other hand, if each CPU of a multi-processor is run, although applications are executed at each CPU, exclusion control for simultaneously executed applications becomes necessary. Thus, although fine control by the OS kernel becomes possible, a problem arises in that overhead arises consequent to the management structure. In particular, in integrated systems such as mobile terminals, the overhead consequent management mechanisms becomes a load that cannot be disregarded.

To solve the problems related to the conventional technologies above, an object of the present invention is to provide a multi-core processor system, an interrupt program, and interrupt method capable of improving the efficiency of processor utilization and operation that imposes low load.

### MEANS FOR SOLVING PROBLEM

To solve the problems above and achieve an object, the multi-core processor system has a core executing an OS and a plurality of applications, and another core to which a thread of the applications is assigned. The multi-core processor system includes a receiving unit that receives from the core, an interrupt signal specifying an event that has occurred with an application among the applications; a determining unit that determines whether the event specified by the received interrupt signal is any one among a start event for exclusion and a start event for synchronization for the thread currently under execution by the other core; a saving unit that saves the thread currently under execution from the other core, when the determining unit determines the specified event to be a start event; and an assigning unit that assigns another thread other than the saved thread and among a group of execution-awaiting threads of the applications, as a thread to be executed by the other core.

### EFFECT OF THE INVENTION

The present multi-core processor system, interrupt program, and interrupt method effect improved the efficiency of processor utilization and operation that imposes low load.

### BRIEF DESCRIPTION OF DRAWINGS

FIG. 1 is a block diagram of a hardware configuration of a multi-core processor system according to the present embodiment;
FIG. 2 is a flowchart depicting a procedure of processing executed at the multi-core processor system according to the present embodiment;
FIG. 3 is a sequence diagram depicting a first example of interrupt control;
FIG. 4 is a sequence diagram depicting a second example of interrupt control;
FIG. 5 is a sequence diagram depicting a third example of interrupt control; and
FIG. 6 is a sequence diagram depicting a fourth example of interrupt control.

### BEST MODE(S) FOR CARRYING OUT THE INVENTION

Preferred embodiments of a multi-core processor system, an interrupt program, and an interrupt method will be explained with reference to the accompanying drawings. In the multi-core processor system of the present embodiment, a multi-core processor is a processor equipped with multiple cores. Provided multiple cores are equipped, a multi-core processor may be a single processor equipped with multiple cores, or a group of parallel single-core processors. In the present embodiment, for the sake of simplicity, description will be given using a group of parallel single-core processors as an example.

### (Hardware configuration of multi-core processor system)

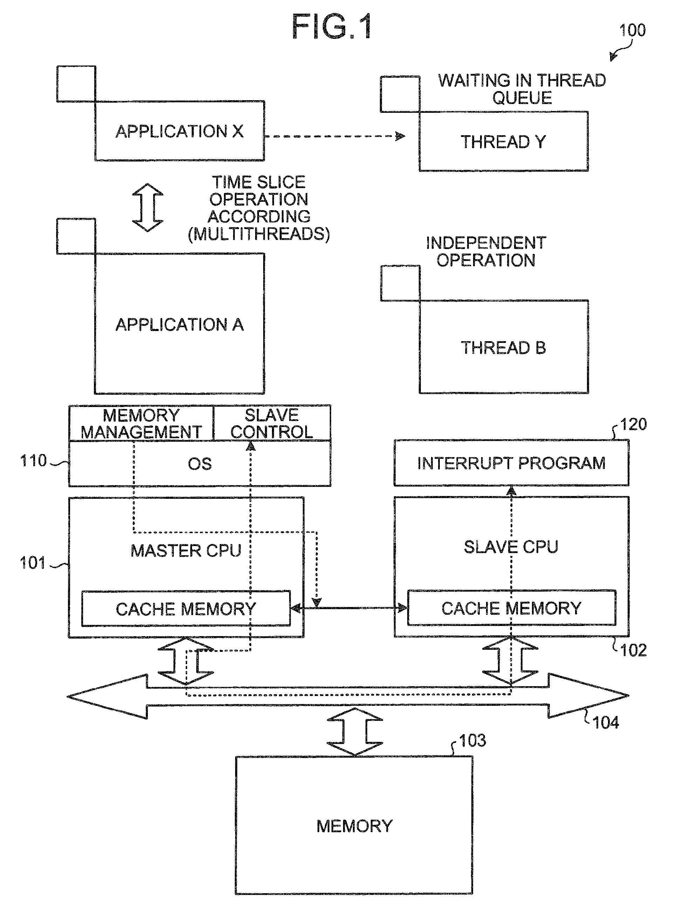

FIG. 1 is a block diagram of a hardware configuration of the multi-core processor system according to the present embodiment. In FIG. 1, a multi-core processor system 100 includes a master CPU 101, 1 or more slave CPUs 102 (1 in the example depicted in FIG. 1), and memory 103, respectively connected through a bus 104. Cache memory is integrated in the master CPU 101 and the slave CPU 102.

An OS 110 that controls management of the memory and the slave CPU 102 runs on the master CPU 101. The OS 110 runs only on the master CPU 101. On the master CPU 101, applications corresponding to the OS 110 run during time slices, according to the OS 110 scheduling. Application A includes thread B, which is invoked while application A is running. Application X includes thread Y, which is invoke while application X is running.

The slave CPU 102 executes an interrupt program 120. A thread of an application executed by the master CPU 101 is also executed. Since the OS 110 does not run on the slave CPU 102, the slave CPU 102 operates independently.

The memory 103 stores the OS 110, applications as well as other types of information, and is used as a work area of the master CPU 101 and the slave CPU 102. The memory 103, for example, is a storage device such as Read Only Memory (ROM), Random Access Memory (RAM), flash memory, and a hard disk drive.

In FIG. 1, at the master CPU 101, applications A and X are running on the OS 110 according to time slices. At the slave CPU 102, thread B of application A is running independently. Thread Y of application X is waiting in a thread queue of the CPU 101.

In the present embodiment, if an exclusive event or a synchronized event occur, the slave CPU 102 operates efficiently. Here, an example of synchronization will be described. For example, application A is assumed to have a function of reading in and expanding a file on the memory 103; and thread B, which is simultaneously executed, is assumed to use the data of the file expanded on the memory 103. In this case, thread B waits until completion of the file reading and expansion on the memory by application A. In other words, when the file is read, the memory area where the data is expanded is simultaneously under exclusive monitoring by application A and thread B is temporarily released from the slave CPU 102. Subsequently, after expansion on the memory, the data is shared (simultaneously) with thread B.

An example of exclusion will be described. For example, application A is assumed to be a browser and thread B is assumed to be a program for playing moving images. Application X is assumed to be a mailer and thread Y is assumed to be an inquiry program of the mailer.

At the master CPU 101, application A (browser) and application X (mailer) are assumed to run by time sharing. If the time at which thread Y (inquiry program of mailer) is to start arrives while thread B (program for playing moving images) is playing a moving image from a video delivery server, since the OS 110 causes thread Y (inquiry program of mailer) to be executed by the slave CPU 102, the OS 110 performs exception handling with respect to thread B (program for playing moving images). Consequently, thread B (program for playing moving images) is released from the slave CPU 102 and thread Y (inquiry program of mailer) is executed at the slave CPU 102.

### (Procedure of interrupt processing by multi-core processor system 100)

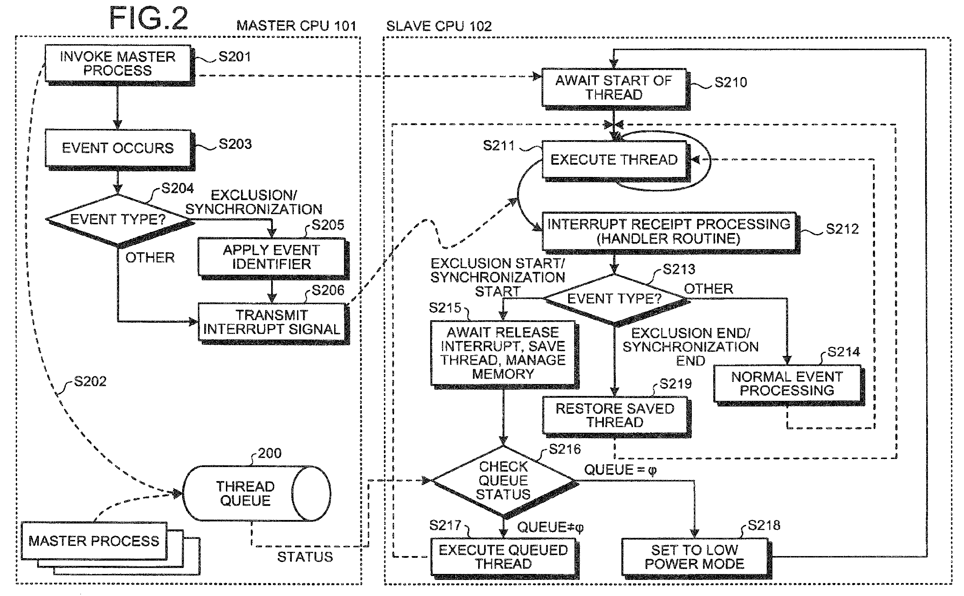

FIG. 2 is a flowchart depicting a procedure of processing executed at the multi-core processor system 100 according to the present embodiment. In FIG. 2, the processing procedure of the master CPU 101 represents management processing of the OS 110 and the processing procedure of the slave CPU 102 represents thread interrupt control processing from the master CPU 101.

The management processing of the OS 110 at the master CPU 101 will be described. The OS 110 invokes master processes in parallel (step S201). For example, applications A and X, which are master processes, are run according to time slices.

When an invoked master process is run, the master CPU 101, via the OS 110, places a thread of the master process in a thread queue 200, according to the execution state of the master process (step S202). For example, threads B and Y are placed in the thread queue 200. Status of the thread queue 200, for example, is written to the memory 103 and can be referred to by the slave CPU 102.

The master CPU 101, via the OS 110, detects the occurrence of an event (step S203). Here, an event is, for example, thread invocation, suspension, exclusion, synchronization, signal/message, etc. An event occurs consequent to an application executed on the OS 110 or a thread executed by the slave CPU 102.

Upon detecting the occurrence of an event, the OS 110 determines the type of the event (step S204). If the event is an event related to exclusion or synchronization (step S204: exclusion/synchronization), the master CPU 101, via the OS 110, applies to the upper bits of an interrupt signal, an identifier indicative of exclusion or synchronization (step S205), and transitions to step S206.

At step S204, if the event is an event of a type other than exclusion/synchronization (step S204: other), the master CPU 101 transitions to step S206. At step S206, the master CPU 101, via the OS 110, transmits to the slave CPU 102, an interrupt signal corresponding to the event for which the type was determined at step S204 (step S206). Thus, the master CPU 101, via the OS 110, transmits to the slave CPU 102, an interrupt signal when an event occurs in a master process and inserts necessary threads into the thread queue 200 to await execution.

The slave CPU 102 awaits the start of a thread by the interrupt program 120 (step S210). Upon start of the thread, the slave CPU 102 executes the thread via the interrupt program 120 (step S211). Thread operations are performed until an interrupt signal is received. If the thread finishes before an interrupt signal is received, the flow transitions to step S216.

Upon receiving the interrupt signal from the master CPU 101, the slave CPU 102, via the interrupt program 120, executes interrupt receipt processing (step S212). The slave CPU 102, via the interrupt program 120, determines the event type indicated by the interrupt signal (step S213). If the event is an event of a type other than exclusion or synchronization (step S213: other), the slave CPU 102, via the interrupt program 120, executes event processing according to the event (step S214), and returns to step S211.

Meanwhile, if the event type is a start event for exclusion or synchronization (step S213: exclusion start/synchronization start), the slave CPU 102, via the interrupt program 120, saves the state of the thread currently under execution (step S215). For example, the data on the cache memory of the slave CPU 102, used by the thread currently under execution, is flushed to the memory 103 and the position of the program counter that has been in operation up to now is saved, without releasing the context area on the memory 103. Consequently, the slave CPU 102 is released from the executed thread.

Upon saving the thread state, the slave CPU 102, via the interrupt program 120 checks the status of the thread queue 200 of the OS 110 (step S216). If the thread queue 200 is not an empty set (step S216: queue≠Φ), the slave CPU 102, via the interrupt program 120, sets the thread (not the saved thread) at the head of the thread queue 200 as the thread to be executed, and executes the thread (step S217). The flow returns to step S211.

Meanwhile, if the thread queue 200 is an empty set (step S216: queue=Φ), the slave CPU 102, via the interrupt program 120, is set to a low power mode (step S218), and transitions to the thread-start standby mode at step S210.

At step S213, if the event type is exclusion release (end) or synchronization end (step S213: exclusion release/synchronization end), the slave CPU 102, via the interrupt program 120, restores the saved thread state (step S219). For example, although the slave CPU 102 has been released from the saved thread, the memory area used by the saved thread is preserved since the context area on the memory 103 has not been released.

Simply, by restoration alone of the program counter of the saved thread stored to a register (or the memory 103) of the slave CPU 102, the save thread can be resumed (restored). Subsequently, the flow returns to step S211. Thus, the slave CPU 102, which conventionally is in a quiescent state to await exclusion or synchronization, can be operated more efficiently by the operations above.

### (Example of interrupt control)

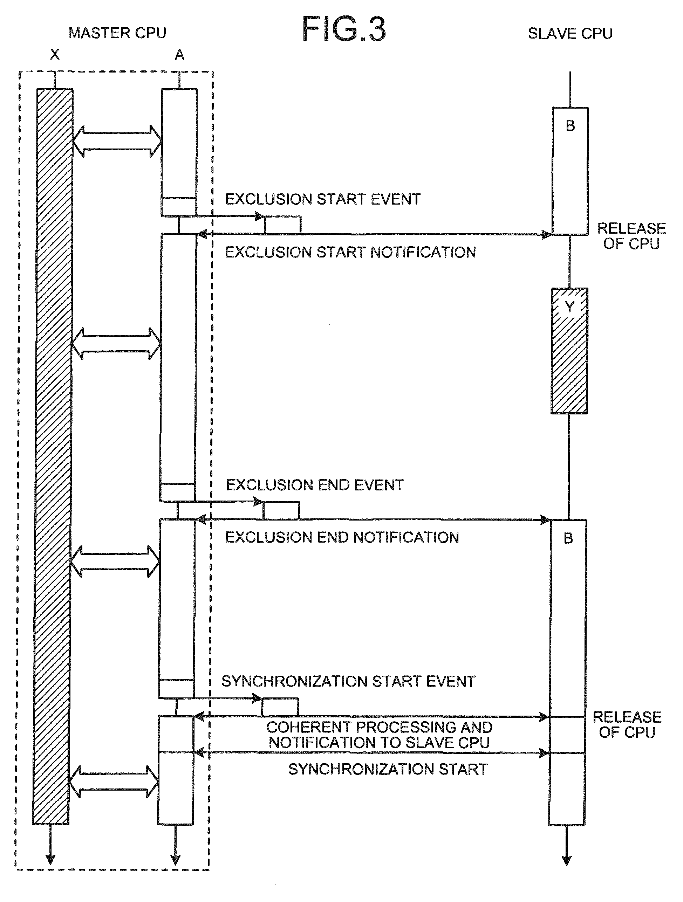

With reference to FIGs. 3 to 6, an example of interrupt control will be described.

FIG. 3 is a sequence diagram depicting a first example of interrupt control. In FIG. 3, at the master CPU 101, applications A and X are assumed to run on the OS 110 according to time slices (in actuality, the OS 110, applications A and X run according to time slices). At the slave CPU 102, thread B is assumed to be executed. In the thread queue 200 of the OS 110, thread Y is assumed to be waiting as an execution-awaiting thread.

In application A, when an exclusion start event is detected, an interrupt signal (exclusion start) is transmitted to thread B from application A. At the slave CPU 102, when notification of the exclusion start event is received, thread B is saved, whereby slave CPU 102 is released. Since thread Y is present in the thread queue 200, thread Y is assigned to the slave CPU 102. Consequently, thread Y is executed at the slave CPU 102. Subsequently, when thread Y ends, since the thread queue 200 is empty, the slave CPU 102 transitions to a low power mode.

Thereafter, in application A, when an exclusion end event is detected, an interrupt signal (exclusion end) is transmitted to the slave CPU 102 from application A. At the slave CPU 102, when notification of the exclusion end event is received, thread B is restored by the slave CPU 102, whereby execution of thread B can be resumed from the saved position.

Similarly, in the case of synchronization, in application A, when a synchronization start event is detected, application A instructs thread B to execute coherent processing and gives notification to the slave CPU 102. Here, at slave CPU 102, although thread B is temporarily saved, thread B is soon restored. When the time at which synchronization is to start arrives, application A and thread B are simultaneously executed.

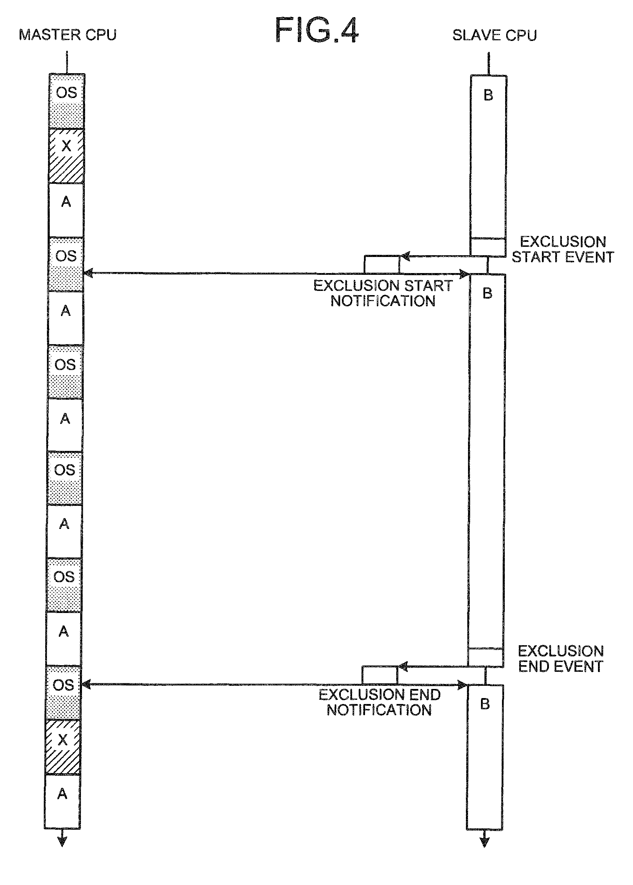

FIG. 4 is a sequence diagram depicting a second example of interrupt control. In FIG. 4, at the master CPU 101, applications A and X are assumed to run on the OS 110 according to time slices. At the slave CPU 102, thread B is assumed to be executed. Thread B is assumed to be subject to exclusion by application X, which is not a master process (parent) of thread B.

When thread B detects an exclusion start event for application X, thread B gives notification to the OS 110, trigging detection of a suspend event for application X at the OS 110. Thereafter, the OS 110 and application A run according to time slices. Subsequently, when thread B detects an exclusion end event for application X, thread B gives notification to the OS 110. Thereafter, at the master CPU 101, application X is restored, and the OS 110 and applications A and X are run according to time slices. Thus, even when an exclusion event is detected by the slave CPU 102, the multi-core processor system 100 operates trouble-free.

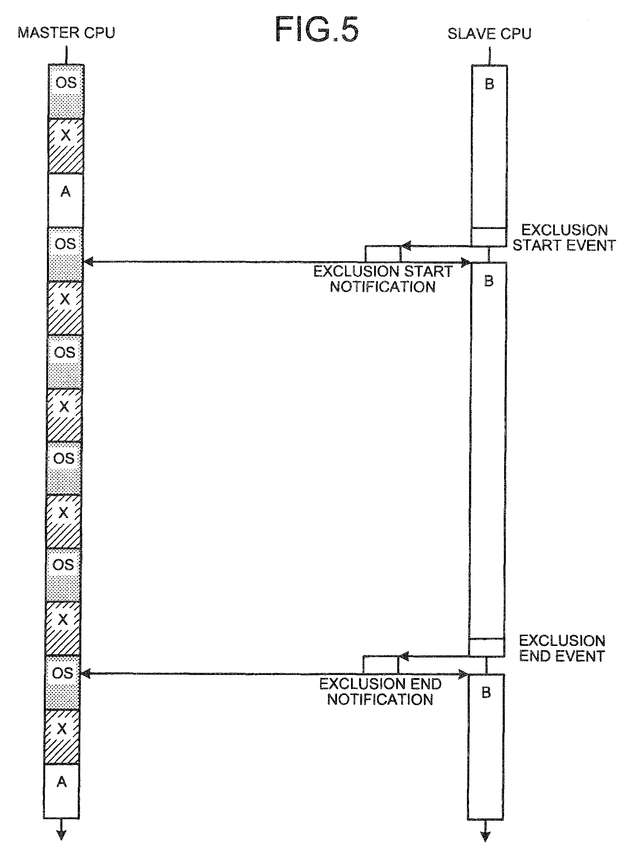

FIG. 5 is a sequence diagram depicting a third example of interrupt control. In FIG. 5, at the master CPU 101, applications A and X are assumed to run on the OS 110 according to time slices. At the slave CPU 102, thread B is assumed to be executed. Thread B is assumed to be subject to exclusion by application A, which is a master process (parent) of thread B.

When thread B detects an exclusion start event for application A, thread B gives notification to the OS 110, triggering detection of a suspend event for application A at the OS 110. Thereafter, the OS 110 and application X run according to time slices. Subsequently, when thread B detects an exclusion end event for application A, thread B gives notification to the OS 110. Thereafter, at the master CPU 101, application A is restored, and the OS 110, and applications A and X are run according to time slices. Thus, even when an exclusion event is detected by the slave CPU 102, the multi-core processor system 100 operates trouble-free.

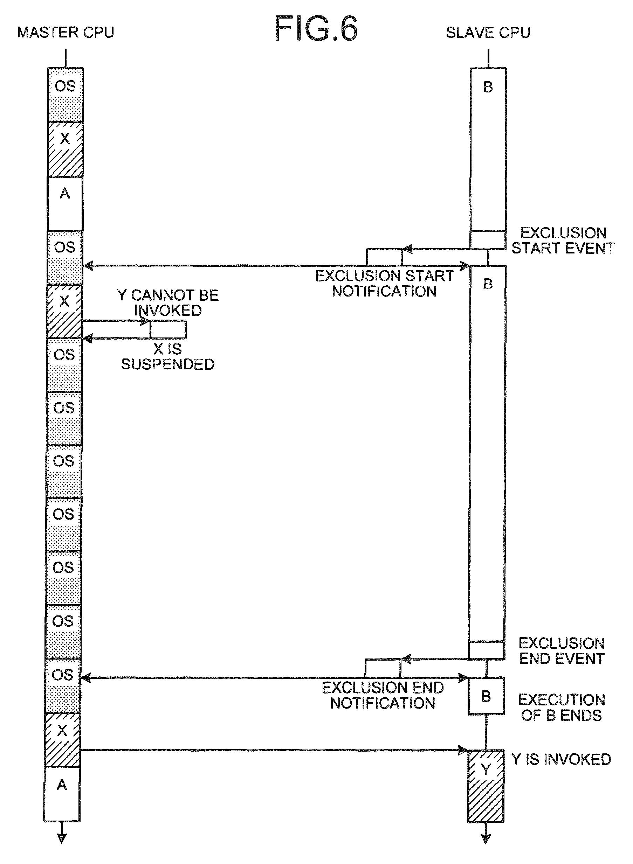

FIG. 6 is a sequence diagram depicting a fourth example of interrupt control. FIG. 6 depicts an example where in the example depicted in FIG. 5, thread Y is placed in the thread queue 200 of the OS 110. When thread B detects an exclusion start event for application A, thread B gives notification to the OS 110, triggering a suspend event of application A to be detected at the OS 110, whereby application A is suspended.

In the example in FIG. 6, although the OS 110 and application X run according to time slices thereafter, if thread Y is to be invoked in application X, since thread B is under execution at the slave CPU 102, thread Y cannot be executed. Consequently, the execution of application X is also suspended, whereby the OS 110 alone is executed at the master CPU 101.

Thereafter, when an exclusion end event is detected by the slave CPU 102, the OS 110 is given notification from thread B. Consequently, thread B ends and at the master CPU 101, the OS 110 and applications X and A run according to time slices.

Thus, in the multi-core processor system 100 according to the present embodiment, irrespective of which CPU among the master CPU 101 and the slave CPU 102 an exclusion or synchronization event occurs, efficient operation can be facilitated.

As described, the multi-core processor system 100, the interrupt program 120, and the interrupt method according to the present embodiment enables the OS 110 alone to be run at the master CPU 101 and since the interrupt program 120 is merely executed by the slave CPU 102, operation that imposes low load can be facilitated.

Further, by subjecting a thread of the slave CPU 102 to exclusion or synchronization by the master CPU 101, a thread under execution can be saved and with the slave CPU 102 in an available state thereafter, an execution-awaiting thread is assigned and executed. Thus, at the slave CPU 102, quiescent mode interval can be significantly reduced, enabling efficient operation to be facilitated. When no execution-awaiting thread is present, the slave CPU 102 transitions to a low power mode, enabling low power consumption to be facilitated.

### EXPLANATIONS OF LETTERS OR NUMERALS

100 multi-core processor system
101 master CPU
102 slave CPU
103 memory
104 bus
120 interrupt program
A, X application
B, Y thread

## Claims

1. A multi-core processor system having a core executing an OS and a plurality of applications, and another core to which a thread of the applications is assigned, the multi-core processor system comprising:
a receiving unit that receives from the core, an interrupt signal specifying an event that has occurred with an application among the applications;
a determining unit that determines whether the event specified by the received interrupt signal is any one among a start event for exclusion and a start event for synchronization for the thread currently under execution by the other core;
a saving unit that saves the thread currently under execution from the other core, when the determining unit determines the specified event to be a start event; and
an assigning unit that assigns another thread other than the saved thread and among a group of execution-awaiting threads of the applications, as a thread to be executed by the other core.

2. The multi-core processor system according to claim 1, and further comprising
an identifying unit that identifies whether the group of execution-awaiting threads is present, when the thread currently under execution is saved, wherein
the assigning unit, upon the identifying unit identifying that the group of execution-awaiting threads is present, assigns another thread other than the saved thread and among a group of execution-awaiting threads of the applications, as a thread to be executed by the other core.

3. The multi-core processor system according to claim 2, and further comprising
a setting unit that sets the other core to a power state that is lower than the current power, upon identifying that the group of execution-awaiting threads is not present.

4. The multi-core processor system according to any one of claims 1 to 3, wherein the assigning unit assigns the saved thread as a thread to be executed by the other core, when the event specified by the interrupt signal is determined by the determining unit to be any one among an end event for exclusion and an end event for synchronization.

5. An interrupt program in a multi-core processor system having a core executing an OS and a plurality of applications, and another core to which a thread of the applications is assigned, the interrupt program being executed by the other core and comprising:
a receiving step of receiving from the core, an interrupt signal specifying an event that has occurred with an application among the applications;
a determining step of determining whether the event specified by the received interrupt signal is any one among a start event for exclusion and a start event for synchronization for the thread currently under execution by the other core;
a saving step of saving the thread currently under execution from the other core, when at the determining step the event specified is determined to be a start event; and
an assigning step of assigning another thread other than the saved thread and among a group of execution-awaiting threads of the applications, as a thread to be executed by the other core.

6. An interrupt method in a multi-core processor system having a core executing an OS and a plurality of applications, and another core to which a thread of the applications is assigned, the interrupt method being executed by the other core and comprising:
a receiving step of receiving from the core, an interrupt signal specifying an event that has occurred with an application among the applications;
a determining step of determining whether the event specified by the received interrupt signal is any one among a start event for exclusion and a start event for synchronization for the thread currently under execution by the other core;
a saving step of saving the thread currently under execution from the other core, when at the determining step the event specified is determined to be a start event; and
an assigning step of assigning another thread other than the saved thread and among a group of execution-awaiting threads of the applications, as a thread to be executed by the other core.
